# EUROPÄISCHE PATENTANMELDUNG

(11) **EP 0 635 417 A1**
(43) Veröffentlichungstag der Anmeldung: **25.01.1995**
(21) Anmeldenummer: 94109270.2
(22) Anmeldetag: 16.06.1994
(51) Int. Cl.: B62D 25/20, B60R 13/00

(54) **Verschlussstopfen für Montageöffnungen**

(30) Priorität: 24.07.1993 DE 4324899
(71) Anmelder: MAN Nutzfahrzeuge Aktiengesellschaft, 80976 München (DE)
(72) Erfinder: Koch, Erich, D-85757 Karlsfeld (DE); Rahlf, Gerhard, D-85757 Karlsfeld (DE)

(57) **Zusammenfassung**

Die Erfindung betrifft einen Verschlußstopfen (1) für unterschiedliche Montageöffnungen (12) in Bauteilen (11), insbesondere in Innen- oder Anbauteilen von Kraftfahrzeugen. Der Verschlußstopfen (1) ist mindestens zweiteilig ausgebildet und besteht aus einem Klemmteil (2) und einer Abdeckkappe (3), wobei die beiden Bauteile gelenkig (4) miteinander verbunden sind. Als Gelenk für die Verbindung von Klemmteil (2) und Abdeckkappe (3) ist ein Kugelgelenk (4) vorgesehen, wobei der Kugelkopf (5) einteilig an der Deckfläche (6) des Klemmteils (2) und die Kugellagerung (7) in der Abdeckkappe (3) angeordnet sind.

## Beschreibung

Die Erfindung bezieht sich auf einen Verschlußstopfen für unterschiedliche Montageöffnungen in Bauteilen, insbesondere in Innen- und Anbauteilen von Kraftfahrzeugen. Hierbei kann es sich u.a. um Abdeckungen, Deckel, Türen und Beschläge handeln. Montagelöcher müssen aus optischen, funktionellen oder anderen Gründen geschlossen werden, wobei zur Demontage des Bauteiles, z. B. im Reparaturfall, eine einfache Entfernung des Verschlusses möglich sein muß. Hierzu werden Verschlußstopfen eingesetzt, die nach dem Montagevorgang des Bauteiles in die zur Versenkung, z. B. der Schraubenköpfe, vorhandenen Bohrungen eingedrückt werden. Aus der Art der Baute-Montage können sich zum Beispiel runde, ovale, quadratische oder rechteckige Löcher/Öffnungen mit unterschiedlichen Größen und Tiefen ergeben, wie auch aus der Bauteil-Geometrie Löcher/Ausschnitte entstehen können, deren Achsen sowohl vertikal wie auch in unterschiedlichen Neigungen zur abzudeckenden Fläche stehen können. Es ist häufig notwendig, für mehrere an einem Bauteil oder einem Aggregat zu verschließende Löcher, unterschiedliche jeweils zu dem betreffenden Loch passende Verschlußstopfen zur Verfügung zu haben, was u.a. einen großen Lageraufwand wie auch eine Vielfalt von Werkzeugen erfordert.

Der Erfindung liegt die Aufgabe zugrunde, einen Einheits-Verschlußstopfen zu schaffen, mit dem Montageöffnungen verschiedenster geometrischer Vorgaben an Bauteilen mit verschiedenem äußeren Aussehen und unterschiedlichen Neigungen der Öffnungsachsen zur Auflagefläche abgedeckt werden können.

Dies wird erfindungsgemäß dadurch erreicht, daß der Verschlußstopfen mindestens zweiteilig ausgebildet ist und aus einem Klemmteil und einer Abdeckkappe besteht, wobei die beiden Bauteile gelenkig miteinander verbunden sind. Die Erfindung ist weiter dahingehend ausgestaltet, daß als Gelenk für die Verbindung von Klemmteil und Abdeckkappe ein Kugelgelenk vorgesehen ist, wobei der Kugelgelenkkopf einteilig an der Deckfläche des Klemmteils und die Kugellagerung in der Abdeckkappe angeordnet sind. Indem die Abdeckkappe aus elastischem Material besteht und somit vom Kugelgelenkkopf lösbar ist, können beliebig viele Varianten von Klemmteilen mit beliebig vielen Varianten von Abdeckkappen kombiniert werden. Solcherart kann mit einem einzigen Verschlußstopfen eine bestimmte Bandbreite geometrischer Konfigurationen und Abmessungen von Montageöffnungen in Bauteilen verschlossen werden. Das Klemmteil ist so gestaltet, daß es in allen möglichen geometrischen Lochformen mit begrenzt unterschiedlichen Abmessungen und Tiefen montiert werden kann. Von großer Bedeutung ist auch die über den Kugelgelenkkopf einstellbare Neigung der Abdeckkappe, so daß der erfindungsgemäße Verschlußstopfen sowohl an Abdeckflächen mit geraden wie auch geneigten Bohrungsachsen eingesetzt werden kann.

Nach einem weiteren Merkmal der Erfindung ist das Klemmteil als Hohlkörper mit nach außen profilierten Wandungen ausgebildet, wobei die Profile elastisch sind. Auf diese Weise kommt es zu einem dichten Reibschluß zwischen Verschlußstopfen und Bohrung oder Montageöffnung im Bauteil.

Das Klemmteil kann auch unterschiedlich geometrisch konfiguriert sein, so zum Beispiel rund, quadratisch oder rechteckig. Es wird auf die Art der Bauteilöffnung abgestimmt, wobei es aber auch möglich ist in bestimmten Grenzen zum Beispiel eine quadratische Öffnung mit einem runden Klemmteil zu beaufschlagen.

In weiterer Ausgestaltung der Erfindung kann die Seitenwand des Klemmteils bereichsweise eine Öffnung aufweisen. Auf diese Weise erhält man eine größere Verformbarkeit des Klemmteils, was seinen Einsatzbereich erweitert.

Die besonderen Vorteile der Erfindung liegen also in der universellen und kostengünstigen Anwendbarkeit des Verschlußstopfens.

Es bieten sich für die beiden Teile des Verschlußstopfens folgende Kombinationen an:
Einheitsklemmteil, passend für eine bestimmte Lochform, unterschiedliche Lochtiefen, vertikale oder zur abzudeckenden Fläche geneigte Bezugsachsen mit einheitlicher oder wahlweise in Form und Farbe unterschiedlicher Abdeckkappe
und/oder
Einheitsabdeckkappe, in Kombination mit verschieden gestalteten Klemmteilen, die jeweils der vorgegebenen Geometrie des abzudeckenden Loches/Öffnung/Ausschnitt angepaßt sind, wobei stets unterschiedlich zur Abdeckfläche geneigte Bohrungsachsen abgedeckt werden können.

Weitere Vorteile ergeben sich auch in der Anwendung des Verschlußstopfens bei geometrisch gleich gestalteten Bauteilen in unterschiedlichen Farben und/oder Oberflächenstrukturen, sowie im Falle der Farb- und Oberflächenstruktur-Umstellung von Bauteilen, wobei in allen Fällen das einheitliche Klemmteil beibehalten werden kann und lediglich die Abdeckkappe getauscht wird.

Die Erfindung ist in einem Ausführungsbeispiel dargestellt und beschrieben.

Es zeigen:
- Fig. 1: ein Verschlußstopfen nach Schnitt A-B der Fig. 2,
- Fig. 2: eine Draufsicht des Verschlußstopfens,
- Fig. 3: eine Anwendung des Verschlußstopfens,
- Fig. 4: eine weitere Anwendung des Verschlußstopfens,
- Fig. 5: eine weitere Anwendung des Verschlußstopfens,
- Fig. 6: ein Fensterrahmen von Kraftfahrzeugen mit unterschiedlichen Bohrungen,
- Fig. 7: Bohrung mit Verschlußstopfen gemäß Schnitt A-A der Fig. 6,
- Fig. 8: Bohrung mit Verschlußstopfen gemäß Schnitt B-B der Fig. 6,
- Fig. 9: Bohrung mit Verschlußzapfen gemäß Schnitt C-C der Fig. 6.

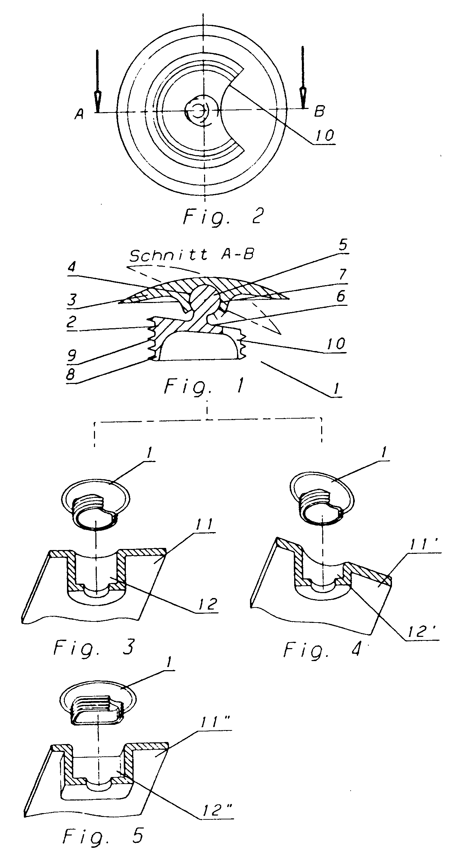

Die Fig. 1 und 2 zeigen einen Verschlußstopfen 1, der zweiteilig ausgebildet ist und aus einem Klemmteil 2 und einer Abdeckkappe 3 besteht, die über ein Kugelgelenk 4 gelenkig miteinander verbunden sind. Das Klemmteil 2 ist einstückig mit dem Kugelgelenkkopf 5 des Kugelgelenkes 4 verbunden. Der Kugelkopf 5 wird von der Kugellagerung 7, die in der Abdeckkappe 3 ausgebildet ist, umgriffen.

Solcherart können Klemmteil 2 und Abdeckkappe 3 nach dem bekannten Prinzip des Druckknopfes verbunden oder gelöst werden. Der Verschlußstopfen 1 kann auch so ausgebildet sein, daß die Wandung 8 bereichsweise eine Öffnung 10 aufweist. Auf diese Weise wird durch die größere Elastizität der Wandung 8 mit den Profilen 9 der Einsatzbereich vergrößert.

Die Fig. 3, 4 und 5 zeigen Anwendungsbeispiele des erfindungsgemäßen Verschlußstopfens 1. In Abbildung 3 kommt ein Verschlußstopfen mit rundem Klemmteil an einem Bauteil 11 mit runder Bohrung 12 zum Einsatz. In Fig. 4 kommt ein Verschlußstopfen 1 an einem Bauteil 11' mit zur Bohrungsachse der Bohrung 12' geneigten Auflagefläche 11' zur Anwendung. Die Fig. 5 zeigt ein Bauteil 11'' mit einer quadratischen oder rechteckigen Öffnung 12'', in der ein Verschlußstopfen 1 mit quadratischem oder rechteckigem Klemmteil eingesetzt wird.

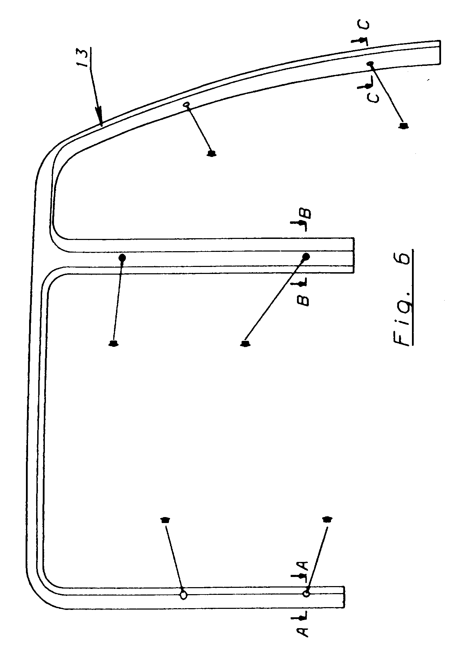

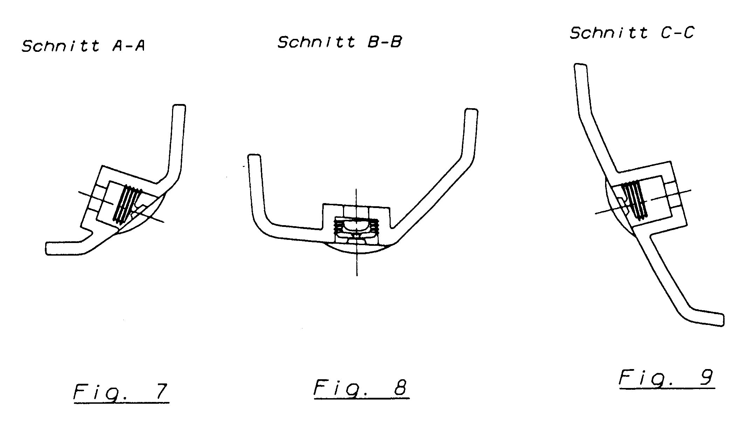

Fig. 6 zeigt den Fensterrahmen 13 eines Fahrzeuges mit mehreren unterschiedlichen Bohrungen, die gemäß den Schnitten A-A, B-B und C-C in den Fig. 7, 8, 9, vergrößert dargestellt, einen einheitlichen Verschlußstopfen aufweisen.

### Bezugszeichenliste

- 1: Verschlußstopfen
- 2: Klemmteil
- 3: Abdeckkappe
- 4: Gelenk, Kugelgelenk
- 5: Kugelgelenkkopf
- 6: Deckfläche von 2
- 7: Kugellagerung in 3
- 8: Wandung von 2
- 9: Profile an 8
- 10: Öffnung in 8
- 11: Bauteil
- 12: Montageöffnung, Bohrung
- 13: Fensterrahmen von Kraftfahrzeug

## Patentansprüche

1. Verschlußstopfen für unterschiedliche Montageöffnungen in Bauteilen, insbesondere in Innen- und Anbauteilen von Kraftfahrzeugen, dadurch gekennzeichnet, daß der Verschlußstopfen (1) mindestens zweiteilig ausgebildet ist und aus einem Klemmteil (2) und einer Abdeckkappe (3) besteht, wobei die beiden Bauteile gelenkig (4) miteinander verbunden sind.

2. Verschlußstopfen nach Anspruch 1, dadurch gekennzeichnet, daß als Gelenk für die Verbindung von Klemmteil (2) und Abdeckkappe (3) ein Kugelgelenk (4) vorgesehen ist, wobei der Kugelgelenkkopf (5) einteilig an der Deckfläche (6) des Klemmteils (2) und die Kugellagerung (7) in der Abdeckkappe (3) angeordnet sind.

3. Verschlußstopfen nach Anspruch 1 oder 2, dadurch gekennzeichnet, daß mindestens die Abdeckkappe (3) aus elastischem Material besteht und vom Kugelgelenkkopf (5) lösbar ist und somit beliebige Varianten von Klemmteilen (2) mit beliebigen Varianten von Abdeckkappen (3) kombinierbar sind.

4. Verschlußstopfen nach den Ansprüchen 1 bis 3, dadurch gekennzeichnet, daß das Klemmteil (2) als Hohlkörper mit nach außen profilierter Wandung (8) ausgebildet ist, wobei die Profile (9) elastisch sind.

5. Verschlußstopfen nach einem oder mehreren der Ansprüche 1 bis 4, dadurch gekennzeichnet, daß das Klemmteil (2) unterschiedlich geometrisch konfiguriert ist, z. B., rund, quadratisch oder rechteckig.

6. Verschlußstopfen nach einem oder mehreren der Ansprüche 1 bis 5, dadurch gekennzeichnet, daß die Seitenwand (8) des Klemmteils (2) bereichsweise eine Öffnung (10) aufweist.
